# EUROPEAN PATENT SPECIFICATION

(11) **EP 0 673 986 B1**
(45) Date of publication and mention of the grant of the patent: **04.06.2003**
(21) Application number: 95103987.4
(22) Date of filing: 17.03.1995
(51) Int. Cl.: C09K 19/30, C09K 19/04, G02F 1/136

(54) **Active matrix type liquid crystal display apparatus**
Flüssigkristall-Anzeigevorrichtung vom Aktivmatrix-Typ
Dispositif d'affichage à cristaux liquides à matrice active

(30) Priority: 17.03.1994 JP 4680794; 17.03.1994 JP 4680894
(43) Date of publication of application: 27.09.1995
(60) Divisional application: 00116225.4
(73) Proprietor: Hitachi, Ltd., Chiyoda-ku, Tokyo 101 (JP)
(72) Inventor: Ohe, Masahito, Hitachi-shi, Ibaraki 316 (JP); Kondo, Katsumi, Hitachinaka-shi, Ibaraki 312 (JP); Ota, Masuyuki, Hitachinaka-shi, Ibaraki 312 (JP)
(74) Representative: Beetz & Partner Patentanwälte

(56) References cited:
- EP-A- 0 023 728
- EP-A- 0 090 183
- EP-A- 0 205 998
- EP-A- 0 258 868
- EP-A- 0 316 715
- EP-A- 0 364 588
- EP-A- 0 387 032
- EP-A- 0 450 354
- EP-A- 0 492 222
- EP-A- 0 588 568
- EP-A- 0 667 555
- WO-A-91/02710
- WO-A-91/03450
- GB-A- 2 080 561
- GB-A- 2 234 979
- GB-A- 2 250 748
- US-A- 4 345 249
- DATABASE WPI Week 8404 Derwent Publications Ltd., London, GB; AN 84-020129 XP002002116 & JP-A-58 210 057 (DAINIPPON INK) , 7 December 1983 & JP-A-58 210 057 (DAINIPPON INK) 7 December 1983

## Description

The present invention relates to an active matrix type liquid crystal display device in which an electric field is applied mainly parallel to the substrates and in which the broad visual field and the large numerical aperture are compatible.

In conventional liquid crystal display devices, the electrodes for driving the liquid crystal layer are formed on the surface of two substrates, and transparent electrodes are used the electrodes facing each other. This is because what is used is a display method called the twisted nematic display method (TN method) in which the liquid crystal layer is driven by applying an electric field in the vertical direction to the surface of the substrate. On the other hand, regarding the display method in which an electric field is applied in a direction almost parallel to the surface of the substrate, a display method using comb-type electrodes is disclosed in JP-63-21907 (1988) and US 4 345 249. In this case, the electrodes are not necessarily selected to be transparent, but non-transparent and metallic electrodes with higher electric conductivity are used. However, in the above prior art, as for the display method in which the electric field is applied in the direction parallel to the surface of the electrode, (which is designated "horizontal electric field method"), specifically used in the active matrix driving mode the material properties required to realize a high numerical aperture are not described in detail.

In the conventional active matrix type liquid crystal display devices, typically according to the twisted nematic method, transparent electrodes are used. It is, therefore, possible to make the numerical aperture relatively wider, which is the area that the light per unit pixel passes through. However, in the horizontal electric field system, an opaque metal electrode is used. It is, therefore, impossible to realize a large numerical aperture. There is an essential problem in that the portion of the opaque electrode cannot be used as an area the light passes through. The brightness of the display apparatus depends upon the magnitude of the numerical aperture. Even if the intensity of background light is increased, the problem arises that the power consumption is increased extremely.

Accordingly, in order to realize a large numerical aperture in the horizontal electric field method, it is required to enlarge the gap between the electrodes. However, a new problem arises due to the enlargement of the gap. First, a disturbance of orientation occurs by the static electricity, because the volume of the liquid crystal decreases further. Generally, the electrodes in the horizontal electric field method are different in their configuration from those in the prior art. Therefore, the corresponding volume of the liquid crystal is not so large. If the volume becomes smaller by enlarging the gap between the electrodes, the liquid crystal is susceptible to be affected by the effect of static electricity. As a result, the disturbance of orientation due to static electricity increases. Secondly, if the gap between the electrodes becomes large, the problem arises in the horizontal electric field display method that a large drive voltage is required.

It is the underlying problem of the present invention to provide novel active matrix type liquid crystal display devices using the horizontal electric field method, in which a broad visual field and a large numerical aperture are realized.

The above problem is solved according to the independent claim 1. The dependent claims relate to preferred embodiments.

In the following, preferred embodiments of the concept of the present invention will be described.

### Embodiment 1 :

According to the first preferred embodiment the ratio l/d of the gap l between the electrodes to the cell gap d between the substrates facing each other is greater than or equal to 2.0, and the relation between the elasticity constant K₂ and the dielectric anisotropy Δε satisfies the following equation (1) :${\text{K}}_{\text{2}} {\text{/Δε < 9.0·10}}^{\text{-13}} {\text{N (< 9.0 · 10}}^{\text{-8}} \text{dyn).}$

### Embodiment 2 :

According to a second preferred embodiment of the present invention, the cell gap d is less than or equal to 6 mm, the gap ℓ between the electrodes is more than or equal to 10 mm, and the drive voltage is lower than or equal to 5 V.

### Embodiment 3 :

According to a third preferred embodiment of the present invention, the liquid crystal composition includes one or more liquid crystal compounds of the general formula I, 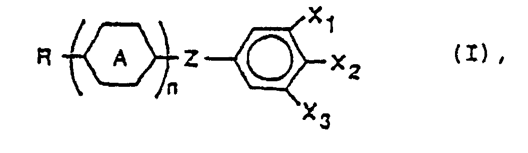 wherein are:
- X₁, X₂ and X₃: fluoro, cyano, trifluoromethyl, trifluoromethoxy, nitro or a hydrogen atom,
- R: C₁₋₁₀-alkyl or C₁₋₁₀-alkoxy, which may be substituted,
- A: a cyclohexane ring, a benzene ring, a dioxane ring, a pyrimidine ring or a bicyclo [2.2.2]-octane ring,
- Z: a single bond, an ester bond, an ether bond, methylene or ethylene,
and
- n: 1 or 2.

### Embodiment 4 :

According to a fourth preferred embodiment, the liquid crystal composition includes one or more liquid crystal compounds of the general formula II, 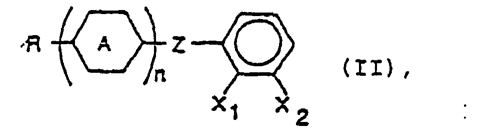 wherein are:
- X₁ and X₂: fluoro, cyano, trifluoromethyl, trifluoromethoxy, nitro or a hydrogen atom,
- R: C₁₋₁₀-alkyl or C₁₋₁₀-alkoxy, which may be substituted,
- A: a cyclohexane ring, a benzene ring, a dioxane ring, a pyrimidine ring or a bicyclo[2.2.2]-octane ring,
- Z: a single bond, an ester bond, an ether bond, methylene or ethylene,
and
- n: 1 or 2.

### Embodiment 5 :

According to a fifth preferred embodiment of the present invention, when the dielectric anisotropy Δε of the liquid crystal is positive, the rubbing angle is set to be more than or equal to 1 degree and less than or equal to 20 degrees relative to the vertical direction of the electric field, and when the dielectric anisotropy Δε of the liquid crystal is negative, the rubbing angle is set to be more than or equal to 1 degree and less than or equal to 10 degrees relative to the direction of the electric field.

### Embodiment 6 :

According to a sixth preferred embodiment of the present invention, the common electrode is composed of a part of the display pixels, and an alternating current is applied to the common electrode.

### Embodiment 7 :

According to a seventh preferred embodiment of the present invention, the transmission axis of the polarizer is set to deviate 1 degree or more than 1 degree from the initial orientation direction of the liquid crystal to the rotation direction of the axis of the liquid crystal molecules due to the applied electric field.

### BRIEF DESCRIPTION OF THE DRAWINGS

In the following,the invention will be further explained with reference to the drawings.
Figs 1 (a) to (d) are views illustrating the operation of the liquid crystal using the horizontal electric field method.
Fig. 2 is an illustrative representation of the definition of the rubbing direction and the axis direction of the polarizer.
Figs. 3 (a) to (c) are views showing an example of the electrode configuration in the unit pixel of the liquid crystal display device.
Fig.4 is a view showing another example of the electrode configuration in the unit pixel of the liquid crystal display device.
Fig.5 is a typical example of the configuration of a color filter substrate.
Fig. 6 is a diagrammatic view showing a TFT circuit in the liquid crystal display device according to the present invention.
Figs. 7 (a) to(e) show examples of the waveform of the alternating current applied to the common electrode.
Fig. 8 is a graph showing the results of experiments on the voltage hold ratio in the liquid crystal display device according to the present invention.
Fig. 9 is a graph showing the influence of the rubbing direction on the drive voltage.
Fig. 10 is a graph showing the variation of the voltage-transmittance characteristic caused by the variation of the axis direction of the polarizer.
Fig. 11 is a graph showing a voltage-transmittance characteristic.
Fig. 12 is a graph showing a voltage-transmittance characteristic.

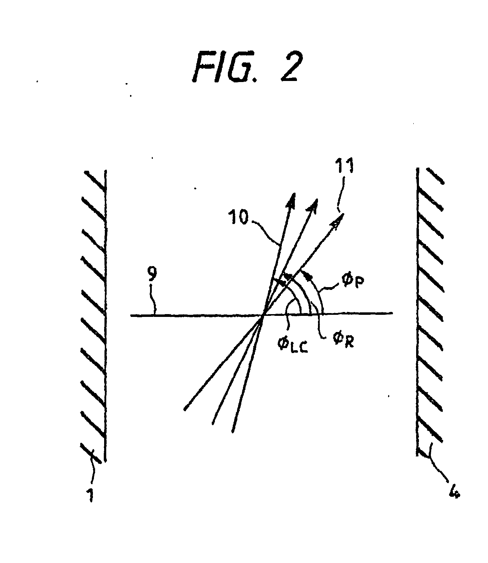

In Fig. 2, the angle φ_{P} is defined by the polarization transmission axis 11, the angle φ_{LC} is defined by the liquid crystal molecule longitudinal axis (optical axis) 10 in the view of the interface, and the angle φ_{R} is defined by the condenser axis of a phase shifter plate inserted between two polarizers. The angles φ_{P} and φ_{LC} are expressed selectively in terms of φ_{P1}, φ_{P2}, φ_{LC1} and φ_{LC2} with regard to a pair of polarizers and two liquid crystal interfaces.

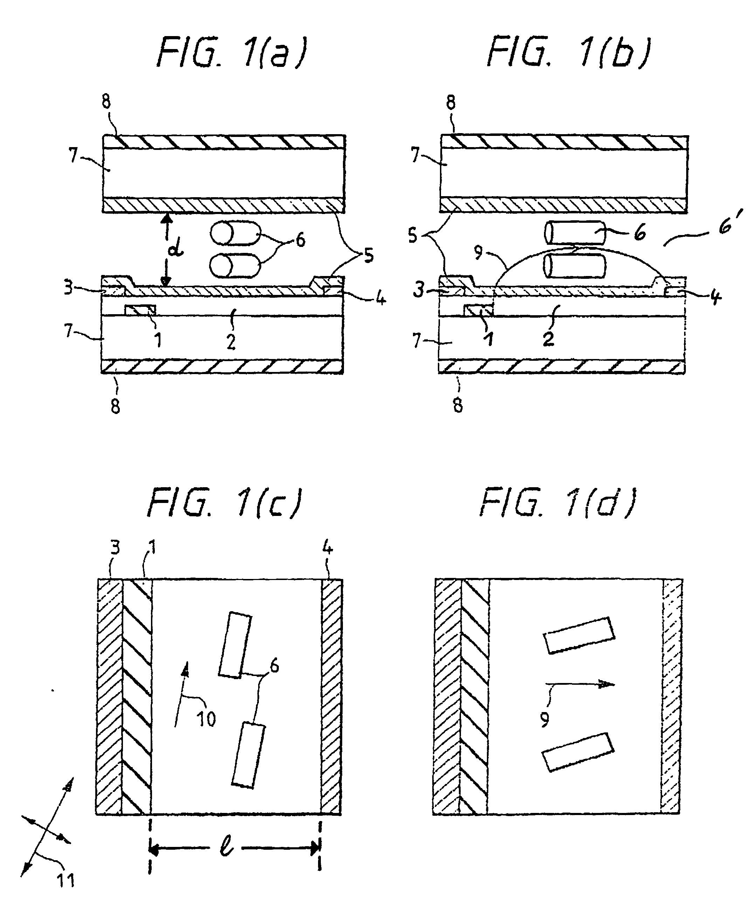

Figs. 1(a) and (b) are side cross-sectional views showing the operation of the liquid crystal in the liquid crystal panel, and Figs. 1(c) and (d) show front views of them in the present invention. In Fig. 1, active devices are not shown. In addition, though a plurality of pixels are formed with stripe-shaped electrodes in the present invention, a partial view of only one single pixel is shown in Fig. 1. The side cross-sectional view when no voltage is applied is shown in Fig. 1(a), and the front view is shown in Fig. 1(c) . The gap l between the electrodes is indicated in Fig. 1(c). The linear electrodes 3 and 4 are formed on the inner side of a pair of transparent substrates 7, and orientation films 5 are coated on the substrates 7 such that they are facing each other. A liquid crystal composite material 6 is inserted between the films, the gap d being indicated in Fig. 1(a). The liquid crystal molecules 6 of linear shape are oriented so that the angle φ_{LC} between the longitudinal axis of the molecules and the longitudinal direction of the stripe-shaped electrode may be maintained to be an adequate angle such as 45° < | φ_{LC} | < 90°.

For the explanation below, the orientation direction of the liquid crystal molecules on the upper and lower interfaces is assumed to be parallel to each other, that is, φ_{LC1} = φ_{LC2}

The dielectric anisotropy Δε of the liquid crystal composite material is assumed to be positive. Next, when the electric field 9 is applied, as shown in Figs. 1(b) and 2, the longitudinal axis 10 of the liquid crystal molecules 6 is oriented in the direction of the electric field 9. By suitably arranging the polarizer 8 with its polarization axis, the optical transmission index can be modulated by applying and changing the applied electric field 9. Thus, a display operation for defining contrast is possible without transparent electrodes. Though the dielectric anisotropy of the liquid crystal composite material is assumed to be positive, it may be selected to be negative. In case of negative dielectric anisotropy Δε, as for the initial orientation of the liquid crystal molecules, the angle φ_{LC} is maintained to be an adequate angle to the vertical direction to the longitudinal axis of the striped electrode such as 0° < |φ_{LC} |< 45°.

By providing the electrode between at least two dielectric layers disposed above and below the electrode, and by making the resistivity 9 of the liquid crystal lower than or equal to 1·10¹³ Ω·cm in accordance with the solution of the present invention, it is possible to increase the numerical aperture. The reason will be explained hereinafter. In the horizontal electric field mode, an opaque metal electrode is used. It is, therefore, impossible to realize numerical apertures larger than those of the prior art. The basic method for solving this problem is to enlarge the gap between the electrodes. However, a new problem may arise due to the enlargement of the gap. There occurs a disturbance of orientation by static electricity, because the volume of the liquid crystal is further decreased. The provision of an auxiliary capacitance to each of the pixels leads to a deterioration of the numerical aperture. However, if the resistance of the liquid crystal is low, the disturbance of the orientation due to the static electricity is small. Therefore, these are very effective means. By these means, the domains around the spacer beads are also improved. In conventional active matrix type liquid crystal display devices, it is required to use liquid crystals with a high resistivity 9 of at least 1·10¹³ Ω.cm, preferably at least 1·10¹⁴Ω·cm, in order to apply a sufficient voltage even during non-selected periods of time. In the horizontal electric field method, the dielectric except the liquid crystal, such as a glass or an insulation film, acts as a hold capacitance to obtain the voltage hold ratio necessary to work. By experiments, it has been found that even a liquid crystal with a resistivity 9 of 1·10¹⁰ Ω·cm has a high voltage holding rate (frame frequency: 60 Hz) of more than 90 %. However, as compared to the conventional method such as the TN method, the total capacitance including the capacitance of the liquid crystal and the hold capacitance is smaller in magnitude in the horizontal electric field method, and is susceptible to be affected by the effect of static electricity. It is not the static electricity but the increase of the drive voltage which is brought up by the enlargement of the gap between the electrodes.

As for the means for reducing the drive voltage, it has been found to be effective that, as described in the preferred embodiments 1 and 2, the ratio of the elasticity constant (K₂) of the twist to the dielectric anisotropy (Δε) of the liquid crystal composite material should satisfy the equation${\text{K}}_{\text{2}} {\text{/Δε < 9.0·10}}^{\text{-13}} {\text{N (< 9.0·10}}^{\text{-8}} \text{dyn).}$ As the thickness of the electrode is less than that of the liquid crystal composite material layer in the ordinary horizontal electric field method, it is impossible to apply the electric field completely parallel to the interface between the liquid crystal and the orientation layer and the liquid crystal composite material layer. This insufficient horizontal electric field causes a reduction of the efficiency in the switching operation of the liquid crystal at the interface. By making the dielectric constant ε_{LC} of the liquid crystal larger than the dielectric constant ε_{AF} of the orientation layer, preferably making ε_{LC} twice as large than ε_{AF}, what can be applied to the liquid crystal is a horizontal electric field which is more parallel to the interface between the liquid crystal and the orientation layer. Based on a more intensive study in which the elasticity constant K₂ of the twist was modified to be smaller or the dielectric anisotropy Δε of the liquid crystal was modified to be larger, when the ratio K₂/Δε between the elasticity constant K₂ and the dielectric anisotropy Δε is set to be 9.0·10⁻¹³ N (9.0·10⁻⁸ dyn), and more preferably when this ratio is set to be 7.0·10⁻¹³ N (7.0·10⁻⁸ dyn), a drive voltage of 5 V or less can be attained. A drive voltage of 5 V means that it is possible to achieve a display by using a 5 V signal voltage driver.

A described in embodiment 3, by including chemical liquid crystal compounds represented by the general formula I, in which cyano groups, trifluoromethyl groups, trifluoromethoxy groups or nitro groups are included as end groups, effective liquid crystal devices may be achieved having a large numerical aperture. Namely, by decreasing the resistivity, the influence of static electricity can be prevented, and at the same time the drive voltage can be decreased. The decrease of the resistivity is further effective for small viscosity necessary for high-speed response.

Liquid crystals which do not have increased resistivity, such as through cyano groups, can be used for display devices because liquid crystals with lower resistivity show a high voltage hold ratio in the horizontal electric field method. Therefore, the applicability of this kind of liquid crystals is remarkably improved.

More concretely, examples for compounds of formula (I) are : 1,2-dicyano-4-[trans-4-(trans-4-propylcyclohexyl)-cyclohexyl] -benzene; trans-4-propyl(3,4-dicyanobiphenyl-4'-yl)-cyclohexane; 2-(trans-4-propylcyclohexyl)-1-[trans-4-(3,4-dicyanophenyl)-cyclohexyl] -ethane; 3,4-dicyanophenyl-trans-4-pentylcyclohexylcarboxylate; 4-cyano-3-fluorophenyl-trans-4-propylcyclohexylcarboxylate; trans-4-heptyl-(3,5-difluoro-4-nitrophenyl)-cyclohexane; 2,6-difluoro-1-cyano-4 -[trans-4-(trans-4-propylcyclohexyl) -cyclohexyl] -benzene; trans-4-propyl-(3,4,5-trifluorobiphenyl-4'-yl)-cyclohexane; 2-(trans-4-propylcyclohexyi)-1-[trans-4-(3,5-difluoro-4-nitrophenyl)-cyclohexyl]-ethane; 3,5-difluoro-4-nitrophenyl-trans-4-pentylcyclohexylcarboxylate; trans-4-heptyl-(3-fluoro-4-cyanophenyl)-cyclohexane; 2-fluoro-1-nitro-4-[trans-4- (trans-4-propylcyclohexyl) -cyclohexyl] -benzene; trans-4-propyl-(3-fluoro-4-cyanobiphenyl-4'-yl)-cyclohexane; 2- (trans-4-propylcyclohexyl) -1- (trans-4- (3-fluoro-4-nitrophenyl)-cyclohexyl] -ethane; 3-fluoro-4-cyanophenyl-trans-4-pentylcyclohexylcarboxylate; trans-4-heptyl-(4-cyanophenyl) -cyclohexane; 4-cyanophenyl-5-pentyl - 1,3-pyrimidine; 4-cyano-3-fluorophenyl-5-propyl-1,3-pyrimidine; 4-cyanophenyl-4-pentyl - 1,3-dioxane; 4-cyanophenyl-4-pentyl-bicyclo(2.2.2]octane. The present invention is not limited to the above compounds. The liquid crystal compounds having a fluoro group in the ortho position to a cyano group, represented by 4-cyano-3-fluorophenyl-trans-4-propylcyclo-hexylcarboxylate, are known to be materials which do not tend to form dimers leading to loss of the dipole momentum. As such liquid crystal compounds have larger dielectric constants and lower viscosities, it is effective to apply this kind of compounds for high-speed driving operation in the horizontal electric field method.

When using liquid crystals of negative dielectric. anisotropy by including chemical liquid crystal compounds represented by the general formula (II), in which cyano groups, trifluoromethyl groups, trifluoromethoxy groups or nitro groups are included as end groups as described in embodiment 4, we obtained effective liquid crystals leading to a large numerical aperture. Namely, by decreasing the resistivity, the static electricity influence can be prevented, and at the same time the drive voltage can be decreased. The decrease of the resistivity is further effective for small viscosity necessary for high-speed response.

Concrete examples for compounds of formula (II) are:
trans-4-heptyl- (2-cyano-3-fluorophenyl) -cyclohexane; 2-cyano-3-fluoro-4-[trans-4-(trans-4-propylcyclohexyl)-cyclohexyl]-benzene; trans-4-propyl-(2-cyano-3-fluorobiphenyl-4'-yl)-cyclohexane; 2-(trans-4-propylcyclohexyl)-1-[trans-4-(2-cyano-3-fluorophenyl)-cyclohexyl]-ethane; 2-cyano-3-fluorophenyl-trans-4-pentylcyclohexylcarboxylate; trans-4-heptyl-(2-fluoro-3-nitrophenyl)-cyclohexane; 2-fluoro-3-cyano-4-[trans-4-(trans-4-propylcyclohexyl)-cyclohexyl]-benzene; trans-4-propyl-(2-fluoro-3-nitrobiphenyl-4'-yl)-cyclohexane; 2-(trans-4-propylcyclohexyl)-1-[trans-4-(2-fluoro-3-nitrophenyl)-cyclohexyl]-ethane; 2-fluoro-3-cyanophenyl-trans-4-pentylcyclohexylcarboxylate; 2,3-dicyanophenyl-5-pentyl-1,3-pyrimidine; 2-cyano-3-fluorophenyl-5-propyl-1,3-pyrimidine; 2,3-dicyanophenyl-4-pentyl-1,3-dioxane; 2-cyano-3-fluorophenyl-4-pentylbicyclo[2.2.2]octane. The present invention is not limited to the above compounds.

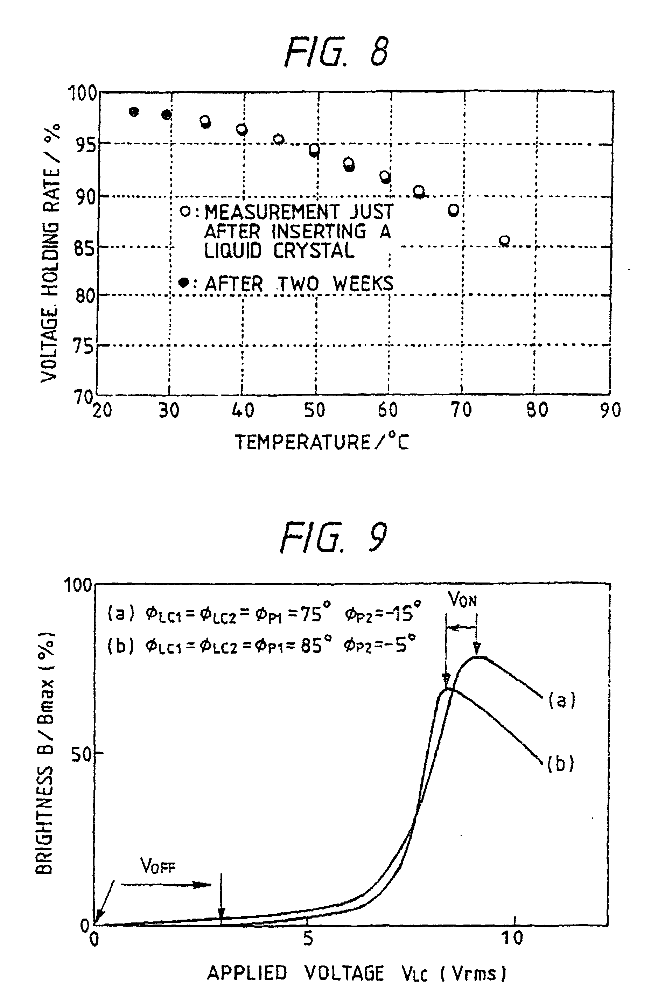

As described in embodiment 5, when the dielectric anisotropy of the liquid crystal is positive, the rubbing angle is set to be more than or equal to 1 degree and less than or equal to 10 degrees, relative to the vertical direction of the electric field, and when the dielectric anisotropy of the liquid crystal is negative, the rubbing angle is set to be more than or equal to 1 degree and less than or equal to 10 degrees, relative to the direction of the electric field. This is another important measure for reducing the drive voltage. As the angle between the axis of the liquid crystal molecules and the direction of the electric field becomes close to 90 degrees, the voltage at the maximum transmission factor shifts to the low voltage side. Further a non-select voltage can be set to the high voltage side, because the threshold voltage of the response to the electric field shifts to the high voltage side. Accordingly, it is possible to reduce the width of the drive voltage. Fig. 9 shows a typical example thereof. Therefore, it is desirable that the rubbing angle is as small as possible, as long as any domains do not occur.

In addition, it is possible to further reduce the drive voltage by applying an alternating current to the common electrode as described in embodiment 6, after having carried out these measures.

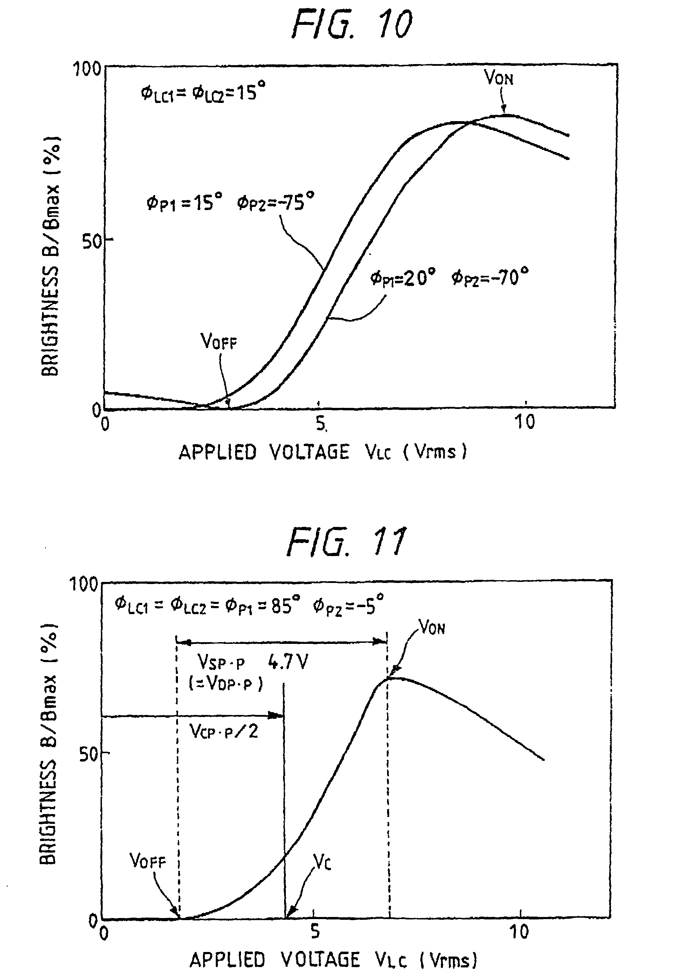

Furthermore, we found that embodiment 7 is also effective to reduce the width of the drive voltage as shown in Fig. 10, in which the transmission axis of a polarizing plate deviates by more than 1 degree from the initial orientation direction.

### DETAILED DESCRIPTION OF PREFERRED DEVICE EMBODIMENTS

In the following, preferred devices of the present invention will be explained in detail.

### Device 1 :

Two transparent glass substrates are used, which are of 1.1 mm in thickness, and the surface of which is polished. After forming thin film transistors on one of the substrates, the orientation film is formed thereon, which also acts as an insulation film. A polyimide is used as the orientation film in this device. A rubbing-processing is performed on the polyimide film in order to orient the liquid crystal. The formation of a polyimide film and the rubbing processing are performed also on the other substrate. The individual rubbing directions of the two substrates are parallel to each other, and have an angle of 75° (φ_{LC1} =φ_{LC2} = 75°) with respect to the direction of the applied electric field. A nematic liquid crystal composition is sandwiched between these substrates, having a dielectric anisotropy Δε of +7.3 and a refractive index anisotropy Δn of 0.074 (589 nm, 20°C). A gap d is achieved by distributing polymer beads between the substrates, and the space of the gap is 4.0 µm. Thus, d·Δn is 0.296 µm. The panel is sandwiched with a pair of polarizers (G1220DU, made by Nitto Electric Co.), and the polarization transmission axis of one polarizer is set to φ_{P1} = 75°, and the polarization transmission axis of the other polarizer is set to intersect perpendicularly with the former polarization transmission axis, which means φ_{P2} = -15°. With this geometrical configuration, the normally-closed. characteristic of the display pixel can be established, that is, the display pixel is in a dark state at a low voltage (V_{OFF}), and is in a bright state at a high voltage (V_{ON}).

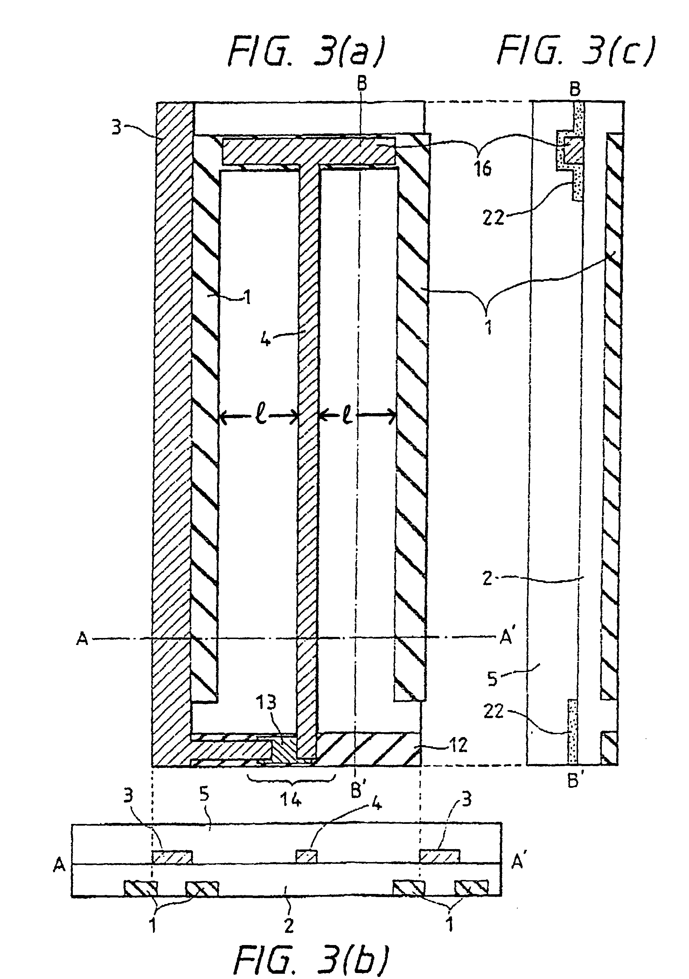

Fig. 3 shows the configurations of a thin film transistor 14 and all kinds of electrodes. Fig.3 (a) is a front view seen from the direction perpendicular to the surface of the substrate. Figs. 3 (b) and (c) are sectional side elevations. The thin film transistor 14 representing the active device comprises a pixel electrode (source electrode) 4, a signal electrode (drain electrode) 3, a scanning electrode (gate electrode) 12, and amorphous silicon 13. Common electrodes 1 and the scanning electrode 12, and the signal electrode 3 and the pixel electrode 4, respectively, are a part of the pattern made by the same metal layer. A capacitor 16 is made by sandwiching a gate insulation film 2 with the pixel electrode 4 and the common electrodes 1 at an area (shown by the dotted line in Fig. 3) between two common electrodes. In Fig.3(a), the pixel electrode 4 is disposed between two common electrodes 1. The pitch of the pixel electrode is 69 µm in the horizontal direction, i.e., between the signal wiring electrodes, and 207 µm in the vertical direction i.e., between the scanning wiring electrodes. The width of the electrode is made large in order to avoid wiring defects in the wiring electrode extending over a plurality of electrodes, the scanning electrode, the signal electrode, or the common electrode wiring portion (the portion extending in the direction (horizontal direction in Fig.3) parallel to the scanning wiring electrode). More concretely, the width of the electrode is made 10 µm. The width of the electrode is made a little bit narrow in order to increase the numerical aperture, the pixel electrode being formed independently for every pixel and the longitudinally extending portion of the signal wiring electrode of the common electrode. More concretely, the width of the electrode is made 5 µm and 8 µm, respectively. The possibility of breaking of wire becomes higher because the width of the electrode is decreased. However, the breaking of wire ends in a partial defect, and does not lead to a line defect. In addition, in order to increase the numerical aperture as much as possible, a portion of the common electrode and a portion of the signal electrode are provided one over the other, wherein an insulation film is inserted between those electrodes, and the width of the piled portion is 1 µm. Thereby, it is not necessary to provide the black matrix 22 parallel to the signal wiring. As a result, the present invention adopts the black matrix configuration as shown in Fig.3(c), in which only the light in the direction of the scanning wiring electrode is prevented. As a result, a high numerical aperture of 44,0% is obtained, wherein the gap between the common electrode and the pixel electrode is 20 µm, the length of the opening in the longitudinal direction is 157 µm, and the number of pixels formed by 320 signal wiring electrodes and 160 wiring electrodes is 320 x 160.

The resistivity 9 of the liquid crystal is 7.6·10¹² Ω·cm and undesirable conditions of orientation due to static electricity do not occur. The active matrix type liquid crystal display device provides both a broad visual field and a large numerical aperture, wherein inversion of gradation does not occur over more than 60 degrees in the up and down directions, and more than 60 degrees in the right and left directions.

### Device 2 :

The structure of device 2 is identical with that of device 1 except for the following features :

The material used for the liquid crystal compound is prepared by adding 5 weight % of 4-cyano-3-fluorophenyl-trans-4-propylcyclohexylcarboxylate to the liquid crystal of device 1. The weight % values indicated hereinafter are based on the total weight.

The resistivity 9 of the liquid crystal is 7.6·10¹² Ω·cm, and undesirable conditions of orientation due to static electricity do not occur. The active matrix type liquid crystal display device provides both a broad visual field and a large numerical aperture, wherein inversion of gradation does not occur over more than 60 degrees in the up and down directions, and more than 60 degrees in the right and left directions.

### Device 3 :

The structure of device 3 is identical with that of device 1 except for the following features :

The material used for the liquid crystal compound is prepared by adding 7 weight % of 3,4-dicyanophenyl-trans-4-pentylcyclohexylcarboxylate into the liquid crystal composition of device 1.

The resistivity 9 of the liquid crystal is 3.3·10¹¹ Ω.cm, and undesirable conditions of orientation due to static electricity do not occur. As a result, the active matrix type liquid crystal display device provides both a broad visual field and a large numerical aperture, wherein inversion of gradation does not occur over more than 60 degrees in the up and down directions, and more than 60 degrees in the right and left directions.

### Device 4 :

The structure of device 4 is identical with that of device 1 except for the following features :

The material used for the liquid crystal compound is prepared by adding 10 weight % of 4-trifluoromethoxy-3,5-difluorophenyl-trans-4-pentylcyclohexylcarboxylate into the liquid crystal compound comprising 4-cyano-3-fluorophenyl-trans-4-ethylphenylcarboxylate, 1-[4-(3,4,5-trifluorophenyl)-cyclohexyl]-2-(4-methylcyclohexyl)-ethane, 4-cyano-3-fluorophenyl-4-(4-propylcyclohexyl)-phenylcarboxylate and so on as representative compounds,

The resistivity 9 of the liquid crystal is 2.4·10¹⁰ Ω·cm, and undesirable conditions of orientation due to static electricity do not occur. The ratio K₂/Δε is made to be 8.5·10⁻¹³ N (8.5·10⁻⁸ dyn). Further, the drive voltage can be established to be 5V or less. As a result, the active matrix type liquid crystal display device provides both a broad visual field and a large numerical aperture wherein inversion of gradation does not occur over more than 60 degrees in the up and down directions, and more than 60 degrees in the right and left directions.

### Device 5 :

The structure of device 5 is identical with that of device 1 except for the following features :

The material used for the liquid crystal compound is prepared by adding 20 weight % of 4-cyano-3,5-difluorophenyl-trans-4-pentylcyclohexylcarboxylate to the liquid crystal compound comprising 4-cyano-3-fluorophenyl-trans-4-ethylphenylcarboxylate, 1-[4-(3,4, 5-trifluorophenyl)-cyclohexyl]-2-(4-methylcyclohexyl)-ethane, 4-cyano-3-trifluoromethyl-5-fluorophenyl-4-(4-propylcyclohexyl)-phenyIcarboxylate and so on as representative compounds,

The resistivity 9 of the liquid crystal is 9.3·10.⁹ Ω·cm, and undesirable conditions of orientation due to static electricity do not occur. The ratio K₂/Δε is made to be 5.4·10⁻¹³ N (5.4·10⁻⁸ dyn). Further the drive voltage can be established to be 5V or less. As a result, the active matrix type liquid crystal display device provides both a broad visual field and a large numerical aperture, wherein inversion of gradation does not occur over more than 60 degrees in the up and down directions, and more than 60 degrees in the right and left directions.

### Device 6 :

The structure of device 6 is identical with that of device 1 except for the following features;

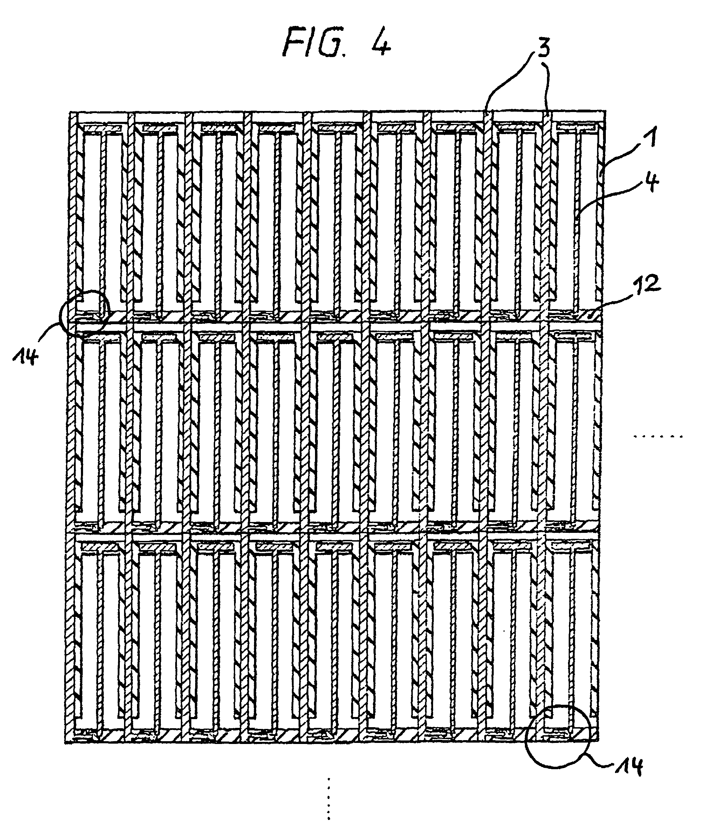

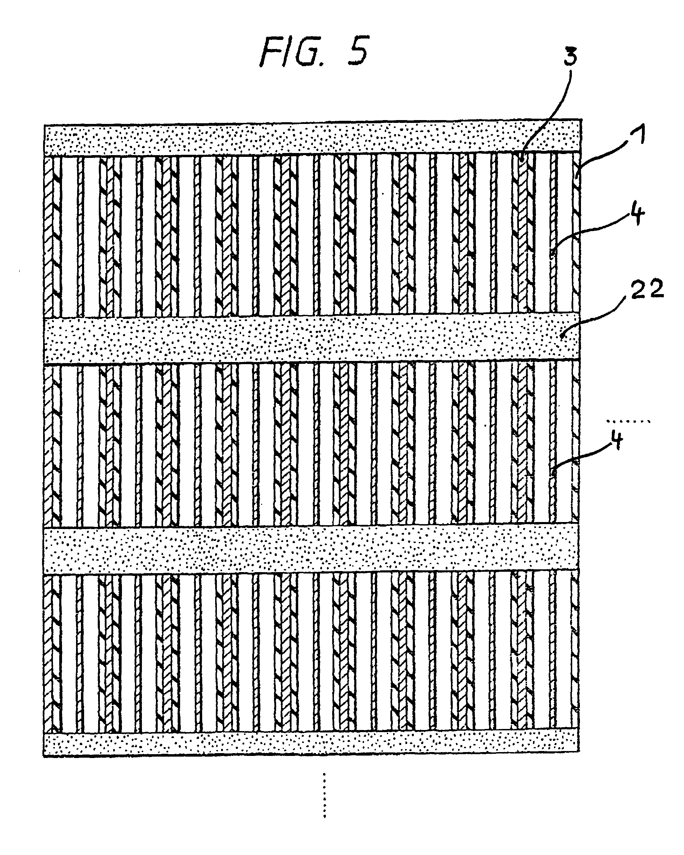

Fig. 4 shows the configurations of thin film transistors 14 and all kinds of electrodes, in more detail; it shows a front view seen from the direction perpendicular to the surface of the substrate of Fig. 4 and sectional side elevations each taken along the lines A-A' and B-B', respectively. The thin film transistor 14 comprises a pixel electrode (source electrode) 4, a signal electrode (drain electrode) 3, a scanning electrode (gate electrode) 12, and amorphous silicon 13 (cf. fig. 3 (a)). The common electrodes 1 and the scanning electrode 12, and the signal electrode 3 and the pixel electrode 4, respectively, are a part of the pattern made by the same metal layer. A capacitor 16 is made by sandwiching a gate insulation film 2 with the pixel electrode 4 and the common electrodes 1 at an area (shown by the dotted line in Fig.3) between two common electrodes. In the front view, the pixel electrode is disposed among three common electrodes 1. The pitch of the pixel electrode is 100 µm in the horizontal direction i.e, between the signal wiring electrodes, and 300 µm in the vertical direction, i.e., between the scanning wiring electrodes. The width of the electrode is made large in order to avoid wiring defects in the wiring electrode extending over a plurality of electrodes, the scanning electrode 12, the signal electrode 13, or the common electrode wiring portion (the portion extending in the horizontal direction in Fig.3) parallel to the scanning wiring electrode). More concretely, the width of the electrodes is made 10 µm, 8 µm and 8 µm, respectively. The width of the pixel electrode is formed independently for every pixel and the longitudinally extending portion of the signal wiring electrode of the common electrode is made a little bit narrow. More concretely, these widths are made 5 µm and 6 µm, respectively. The possibility of the breaking of wire becomes higher because the width of the electrode is decreased. However, the breaking of wire ends in a partial defect, and does not lead to a line defect. In addition, the common electrode and the signal electrode are spaced by using the insulation film, in which the spacing is 2 µm in thickness. The black matrix configuration and a color filter are provided on the opposite substrate side as shown in Fig.5. The gap between the common electrode and the pixel electrode is 20 µm, and the length in the longitudinal direction of the opening is 157 µm. As a result, the number of pixels formed by 640 signal wiring electrodes and 480 wiring electrodes is 320 x 160.

The nematic liquid crystal composition is sandwiched between the substrates and includes 10 weight % of 3-cyano-4-trifluoro-methoxy-5-fluorophenyl-trans-4-ethylcyclohexylcarboxylate; the dielectric anisotropy Δε is + 8.9, and the refractive index anisotropy Δn is 0.08 (589 nm, 20°C).

The resistivity 9 of the liquid crystal is 8.1·10¹² Ω·cm, and undesirable conditions of orientation due to static electricity do not occur. As a result, the active matrix type liquid crystal display device provides both a broad visual field and a large numerical aperture wherein inversion of gradation does not occur over more than 60 degrees in the up and down directions, and more than 60 degrees in the right and left directions.

### Device 7 :

The structure of device 7 is identical with that of device 6 except for the following features:

The material used for the liquid crystal compound is prepared by adding 10 weight % of 4-cyano-3,5-difluorophenyl-trans-4-propylcyclohexycarboxylate to the liquid crystal of device 6.

The resistivity 9 of the liquid crystal is 2.2·10¹⁰ Ω.cm, and undesirable conditions of orientation due to static electricity do not occur. The ratio K₂/Δε is made to be 4.6·10⁻¹³ N (4.6·10⁻⁸ dyn). Further, the drive voltage can be established to be 5V or less. As a result, the active matrix type liquid crystal display device provides both a broad visual field and a large numerical aperture, wherein inversion of gradation does not occur over more than 60 degrees in the up and down directions, and more than 60 degrees in the right and left directions.

### Device 8 :

The structure of device 8 is identical with that of device 6 except for the following features :

The material used for the liquid crystal compound is prepared by adding 20 weight % of 4-cyano-3,5-difluorophenyl-trans-4-propylcyclohexylcarboxylate to the liquid crystal composition of device 6.

The resistivity 9 of the liquid crystal is 6.2·10¹⁰ Ω·cm, and undesirable conditions of orientation due to static electricity do not occur. The ratio K₂/Δε is made to be 2.9·10⁻¹³ N (2.9·10⁻⁸ dyn). Further, the drive voltage can be established to be 5V or less. As a result, the active matrix type liquid crystal display device provides both a broad visual field and a large numerical aperture, wherein inversion of gradation does not occur over more than 60 degrees in the up and down directions, and more than 60 degrees in the right and left directions.

### Device 9 :

The structure of device 9 is identical with that of device 6 except for the following features:

The material used for the liquid crystal compound is prepared by adding 10 weight % of 3-cyano-4-trifluoromethoxy-5-fluorophenyl-trans-4-ethylcyclohexylcarboxylate to the liquid crystal composition of device 6.

The resistivity 9 of the liquid crystal is 8.8·10⁹ Ω·cm, and undesirable conditions of orientation due to static electricity do not occur. The ratio K₂/Δε is made to be 2.3·10⁻¹³ N (2.3·10⁻⁸ dyn). Further, the drive voltage can be established to be 5V or less. As a result, the active matrix type liquid crystal display device provides both a broad visual field and a large numerical aperture, wherein inversion of gradation does not occur over more than 60 degrees in the up and down directions, and more than 60 degrees in the right and left directions.

### Device 10 :

The structure of device 10 is identical with that of device 1 except for the following features:

The individual rubbing directions of the orientation film of the two substrates are parallel to each other, and form an angle of 15°(φ_{LC1} =φ_{LC2}= 15°) with respect to the direction in which the applied electric field extends. A nematic liquid crystal composition is sandwiched between these substrates, in which the dielectric constant anisotropy Δε is - 3.3, and the refractive index anisotropy Δn is 0.074 (589nm, 20°C). The material used here is a liquid crystal composition wherein 4 weight % of 3-cyano-2-fluorophenyl-trans-4-pentylcyclohexylcarboxylate is added to the nematic liquid crystal composition.

The resistivity 9 of the liquid crystal is 8.6·10¹¹ Ω·cm, and undesirable conditions of orientation due to static electricity do not occur. As a result, the active matrix type liquid crystal display device provides both a broad visual field and a large numerical aperture, wherein inversion of gradation does not occur over more than 60 degrees in the up and down directions, and more than 60 degrees in the right and left directions.

### Device 11 :

The structure of device 11 is identical with that of device 6 except for the following features:

10 weight % of 2-(trans-4-propylcyclohexyl)-1-[trans-4-(2, 3-dicyanophenyl-cyclohexyl]-ethane is added to a nematic liquid crystal composition, in which the dielectric constant anisotropy Δε is -3.3, and the refractive index anisotropy Δn is 0.074 (589nm, 20°C).

The resistivity 9 of the liquid crystal is 7.2·10¹⁰ Ω·cm, and undesirable conditions of orientation due to static electricity do not occur. As a result, the active matrix type liquid crystal display device provides both a broad visual field and a large numerical aperture, wherein inversion of gradation does not occur over more than 60 degrees in the up and down directions, and more than 60 degrees in the right and left directions.

### Device 12 :

The structure of device 12 is identical with that of device 6 except for the following features:

The individual rubbing directions of the two substrates are parallel to each other, and form angle of 85° (φ_{LC1}= φ_{LC2} = 85°) with respect to the direction in which the applied electric field extends. The polarization transmission axis of one polarizer is set to φ_{P1} = 85°, and the polarization transmission axis of the other polarizer is set to intersect perpendicularly with the former polarization transmission axis, which means φ_{P2 =}-5°. With this geometrical configuration, a normally-closed characteristic of the display pixels can be established, that is, the display pixels are in a dark state at a low voltage (V_{OFF}), and in a bright state at a high voltage (V_{ON}).

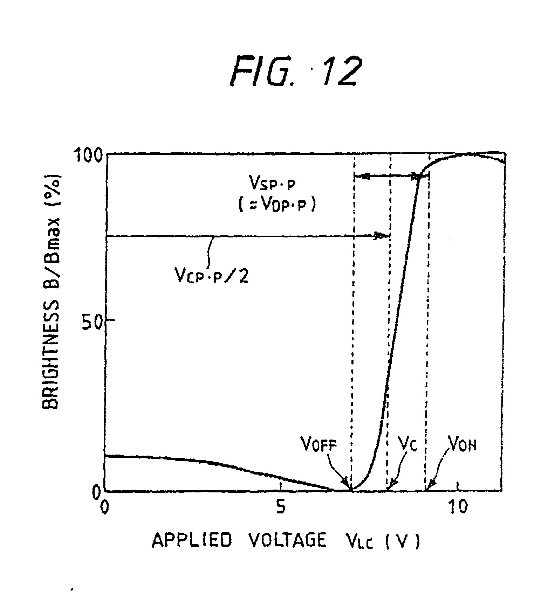

The voltage-transmittance characteristic of this active matrix type liquid crystal device is shown in Fig.11, in which V_{OFF} can be set to 2.1 V, and V_{ON} can be set to 6.8 V. Therefore, the width of the drive voltage can be set to 4,7 V. As a result, the active matrix type liquid crystal display device provides both a broad visual field and a large numerical aperture, wherein inversion of gradation does not occur over more than 60 degrees in the up and down directions, and more than 60 degrees in the right and left directions.

### Device 13 :

The structure of device 13 is identical with that of device 11 except for the following features :

The individual rubbing directions of the two substrates are parallel to each other, and form an angle of 5° (φ_{LC1} =φ_{LC2} =5°) with respect to the direction in which the applied electric field extends. The polarization transmission axis of one polarizer is set to φ_{P1} = 5°, and the polarization transmission axis of the other polarizer is set to intersect perpendicularly with the former polarization transmission axis, which means φ_{P2} = -85°. With this geometrical configuration, the normally-closed characteristic of the display pixels can be established, that is, the display pixels are in a dark state at a low voltage (V_{OFF}), and in a bright state at a high voltage (V_{ON}).

The voltage-transmittance characteristic of this active matrix type liquid crystal device corresponds to that of Fig. 11, in which V_{OFF} can be set to 4.0 V, and V_{ON} can be set to 8.8 V. Therefore, the width of the drive voltage can be set to 4.8 V. As a result, the active matrix type liquid crystal display device provides both a broad visual field and a large numerical aperture, wherein inversion of gradation does not occur over more than 60 degrees in the up and down directions and more than 60 degrees in the right and left directions.

### Device 14 :

The structure of device 14 is identical with that of device 12 except for the following features:

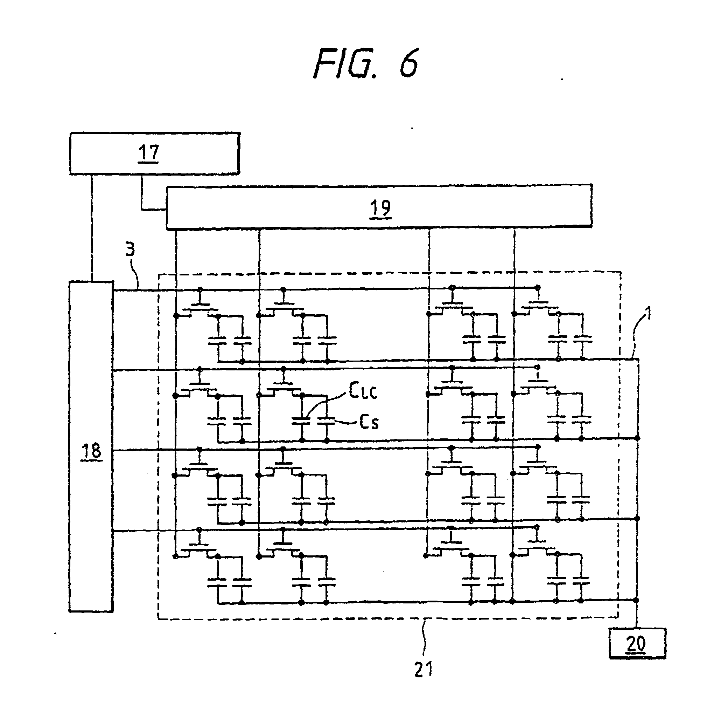

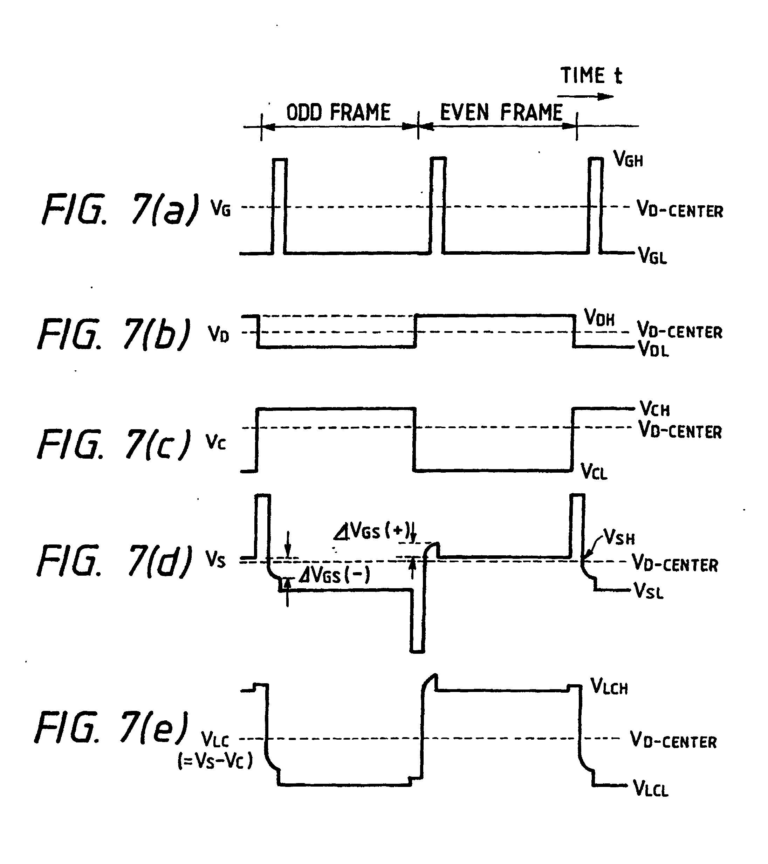

The common electrode is made as shown in Fig.6, in order to apply an alternating current thereto. Each scanning electrode 12 and each signal electrode 3 are connected to a scanning electrode drive circuit 18 and a signal electrode drive circuit 19, respectively. Further, the common electrode 1 is connected to a common electrode drive circuit 20. A signal waveform comprising an information is applied to the signal electrode 3. A scanning waveform in synchronism with the signal waveform is applied to the scanning electrode 12. The information signal is transferred from the signal electrode 3 through a thin film transistor 14 to the pixel electrode 4, whereby the voltage produced between the pixel electrode and the common electrode 1 is applied to a portion of the liquid crystal. In the present invention, a voltage waveform is also applied to the common electrode 1. Therefore, a voltage in which that of the common electrode 1 is added is applied to the portion of the liquid crystal. Fig.7 shows those voltage waveforms applied to each of the wiring electrodes, where the amplitudes of the voltage waveforms in Fig. 7 are set as follows:${\text{V}}_{\text{D-CENTER}} {\text{= 14.0 V, V}}_{\text{GH}} {\text{= 28.0 V, V}}_{\text{GL}} \text{= 0 V,}$${\text{V}}_{\text{DN}} {\text{= 16.4 V, V}}_{\text{DL}} {\text{= 11.4 V, V}}_{\text{CH}} {\text{= 15.1 V, V}}_{\text{CL}} \text{= 9.1 V.}$

V_{ON} and V_{OFF} according to Fig .11 are 2.1V and 6.8V, respectively. As a result, a higher contrast ratio is obtained, namely 150. In Fig.11, V_{DP-P}, V_{SP-P} and V_{CP-P} represent peak-to-peak values of the signal voltage, the source voltage, and the common voltage, respectively.

In the present device the amplitude of the drive voltage waveform V_{DP-P} (= V_{DH} - V_{DL}) has a very low value, 4.7, which is supplied to the signal wiring electrode. Accordingly, a relatively cheap driver can be used, and it becomes possible to reduce the production cost.

### Device 15 :

The structure of device 15 is identical with that of device13 except for the following features:

In the same way as for device 14, the alternative current is applied to the common electrode, and the display device is driven. Accordingly, a relatively cheap driver can be used, and it becomes possible to reduce the production cost.

### Device 16 :

The structure of device 16 is identical with that of the device 14 except for the following features:

The transmission axis of the polarizer is set so as to form an angle of 10° with respect to the rubbing direction, namely, φ_{P1} =75° and φ_{P2}= -15°. Fig.12 shows the relationship between the voltage-transmittance characteristic and the drive waveform obtained in the above structure. In Fig. 12, V_{DP-P}, V_{SP-P} and V_{CP-P} represent peak-to-peak values of the signal voltage, the source voltage, and the common voltage.

The common electrode is made as in device 9, in order to apply an alternating current thereto. Each scanning electrode 12 and each signal electrode 3 are connected to a scanning electrode drive circuit 18 and a signal electrode drive circuit 19, respectively. Further, the common electrode 1 is connected to a common electrode drive circuit 20 (see Fig. 6). A signal waveform comprising an information is applied to the signal electrode 3. A scanning waveform in synchronism with the signal waveform is applied to the scanning electrode 12. The information signal is transferred from the signal electrode 3 through a thin film transistor 14 to the pixel electrode 4, whereby the voltage produced between the pixel electrode and the common electrode 1 is applied to a portion of the liquid crystal. In the present invention, a voltage waveform is also applied to the common electrode 1. Therefore, a voltage in which that of the common electrode 1 is added is applied to the portion of the liquid crystal.

Fig. 7 shows those voltage waveforms applied to each of the wiring electrodes, where the amplitudes of the voltage waveforms in Fig.7 are set as follows:${\text{V}}_{\text{D-CENTER}} {\text{= 14.0 V, V}}_{\text{GH}} {\text{= 28.0 V, V}}_{\text{GL}} \text{= 0 V,}$${\text{V}}_{\text{DH}} {\text{= 15.1 V, V}}_{\text{DL}} {\text{= 12.9 V, V}}_{\text{CH}} {\text{= 20.4 V, V}}_{\text{CL}} \text{= 4.39 V,}$ As a result, the plunge voltages ΔV_{GS}(+) and ΔV_{GS}(-) produced by the parasitic capacitance between the gate electrode and the source electrode, the voltage V_{S} applied over the pixel electrode and the voltage V_{LC} applied over the liquid crystal are shown in the following table. The unit of voltage is hereinafter taken as 1 volt.

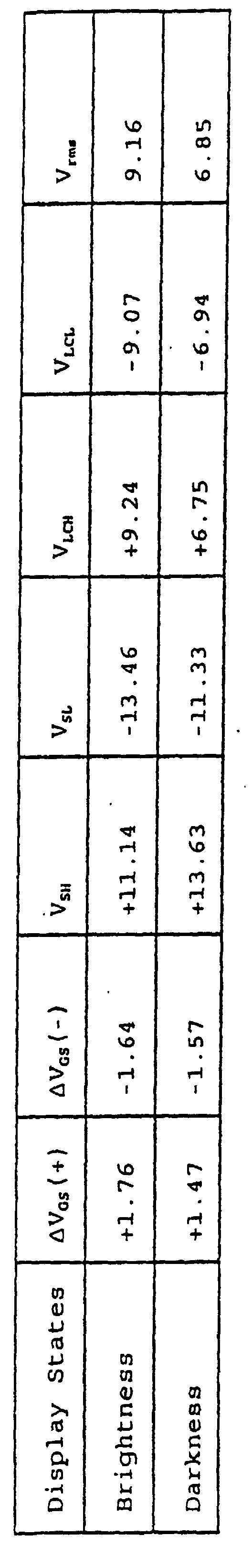

V_{ON} and V_{OFF} of Fig.12 are 9.16 V and 6.85 V, respectively. As a result, a sufficiently high contrast ratio of 100 is obtained.

In the present device, the amplitude of the drive voltage waveform V_{DP-P} (= V_{DH} - V_{DL}) has a very low value of 2.2 V, which is supplied to the signal wiring electrode.

### Device 17 :

The structure of device 17 is identical with that of device 15 except for the following features:

The transmission axis of the polarizer is set so as to form an angle of 10° with respect to the rubbing direction, namely, φ_{P1}= 15° and φ_{P2} = -75°. As a result, V_{ON} and V_{OFF} are 17.4V and 14.2V, respectively. Thus, a sufficiently high contrast ratio of 100 is obtained.

In the present device, the amplitude of the drive voltage waveform V_{DP-P} ( = V_{DH} - V_{DL}) has a very low value of 3.2 V, which is supplied to the signal wiring electrode.

While in the embodiments of this invention, specific liquid crystal compositions and compounds are used, it will easily be understood that other liquid crystal compositions and compounds can be used. The structure of the pixels is also not limited to that of the above-described embodiments according to the present invention.

## Claims

1. Active matrix type liquid crystal display device (21), comprising a pair of substrates (7), at least one of which is transparent, a liquid crystal layer (6') inserted between the substrates (7), an orientation film (5) provided between the liquid crystal layer (6') and at least one of the substrates (7) on the inner side thereof, a scanning signal electrode (3), an image signal electrode, a pixel electrode (4) and an active device (14), each being provided between the liquid crystal layer (6') and the orientation film (5) or the substrate (7), respectively,
and polarization means (8) provided on the outer side of the substrates (7) for changing an optical characteristic according to the orientation state of the liquid crystal, each of the electrodes being constructed so as to apply an electric field, mainly parallel to the substrates (7), against the liquid crystal layer (6'), and being connected to external control means (17, 18, 19, 20) for optionally controlling the applied electric field according to the display pattern, and
the electrodes lying between at least two dielectric layers disposed above and below the electrodes,
**characterized in that**
- the resistivity ρ of the liquid crystal is:${\text{ρ≤1·10}}^{\text{14}} \text{Ω·cm,}$ and preferably${\text{1·10}}^{\text{9}} {\text{≤ ρ ≤ 1·10}}^{\text{13}} \text{Ω·cm,}$
- the ratio l/d of the gap l between the electrodes to the cell gap d is:$\text{l/d ≥ 2.0,}$ and
- the ratio of the elasticity constant K₂ to the dielectric anisotropy Δε is:${\text{K}}_{\text{2}} {\text{/Δε < 9.0·10}}^{\text{-13}} {\text{N (< 9·0·10}}^{\text{-8}} \text{dyn).}$

2. Active matrix type liquid crystal display device according to claim 1, wherein the cell gap d is less than or equal to 6 mm, the gap l between the electrodes is more than or equal to 10 mm, and the drive voltage is lower than or equal to 5 V.

3. Active matrix type liquid crystal display device according to claim 1 or 2, comprising
- one or more liquid crystal compounds of the general formula I, 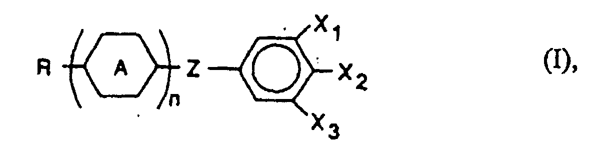
wherein are:
X₁, X₂ and X₃ fluoro, cyano, trifluoromethyl, trifluoromethoxy, nitro or a hydrogen atom,
R C₁-₁₀-alkyl or C₁-₁₀-alkoxy, which may be substituted,
A a cyclohexane ring, a benzene ring, a dioxane ring, a pyrimidine ring or a bicyclo[2.2.2]-octane ring,
Z a single bond, an ester bond, an ether bond, methylene or ethylene,
and
n 1 or 2,
and/or
- one or more liquid crystal compounds of the general formula II, 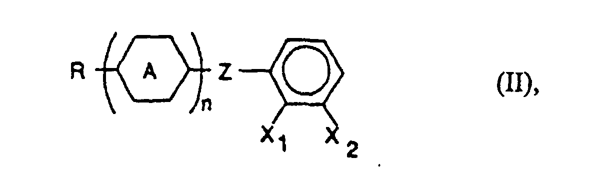
wherein are:
X₁ and X₂ fluoro, cyano, trifluoromethyl, trifluoromethoxy, nitro or a hydrogen atom,
R C₁-₁₀-alkyl or C₁-₁₀-alkoxy, which may be substituted,
A a cyclohexane ring, a benzene ring, a dioxane ring, a pyrimidine ring or a bicyclo[2.2.2]-octane ring,
Z a single bond, an ester bond, an ether bond, methylene or ethylene, and
n 1 or 2.

4. Active matrix type liquid crystal display device according to claim 3, comprising one or more liquid crystal compounds of formula I, selected from 1,2-dicyano-4-[trans-4-(trans-4-propylcyclohexyl)-cyclohexyl]-benzene; trans-4-propyl-(3,4-dicyanobiphenyl-4'-yl)-cyclohexane; 2-(trans-4-propylcyclohexyl)-1-[trans-4-(3,4-dicyanophenyl)-cyclohexyl]-ethane; 3,4-dicyanophenyl-trans-4-pentylcyclohexylcarboxylate; 4-cyano-3-fluorophenyl-trans-4-propylcyclohexylcarboxylate; trans-4-heptyl-(3,5-difluoro-4-nitrophenyl)-cyclohexane; 2,6-difluoro-1-cyano-4-[trans-4-(trans-4-propylcyclohexyl)-cyclohexyl]-benzene; trans-4-propyl-(3,4,5-trifluorobiphenyl-4'-yl)-cyclohexane; 2-(trans-4-propylcyclohexyl)-1-[trans-4-(3,5-difluoro-4-nitrophenyl)-cyclohexyl]-ethane, 3,5-difluoro-4-nitrophenyl-trans-4-pentylcyclohexylcarboxylate; trans-4-heptyl-(3-fluoro-4-cyanophenyl)-cyclohexane; 2-fluoro-1-nitro-4-[trans-4-(trans-4-propylcyclohexyl)-cyclohexyl]-benzene; trans-4-propyl-(3-fluoro-4-cyanobiphenyl-4'-yl)-cyclohexane; 2-(trans-4-propylcyclohexyl)-1-[trans-4-(3-fluoro-4-nitrophenyl)-cyclohexyl]-ethane; 3-fluoro-4-cyanophenyl-trans-4-pentylcyclohexylcarboxylate; trans-4-heptyl-(4-cyanophenyl)-cyclohexane; 4-cyanophenyl-5-pentyl-1,3-pyrimidine; 4-cyano-3-fluorophenyl-5-propyl-1,3-pyrimidine, 4-cyanophenyl-4-pentyl-1,3-dioxane; 4-cyanophenyl-4-pentyl-bicyclo[2.2.2]octane.

5. Active matrix type liquid crystal display device according to claim 3 or 4, comprising one or more liquid crystal compounds of formula II, selected from trans-4-heptyl-(2-cyano-3-fluorophenyl)-cyclohexane;
2-cyano-3-fluoro-4-[trans-4-(trans-4-propylcyclohexyl)-cyclohexyl]-benzene; trans-4-propyl-(2-cyano-3-fluorobiphenyl-4'-yl)-cyclohexane; 2-(trans-4-propylcyclohexyl)-1-[trans-4-(2-cyano-3-fluorophenyl]-cyclohexyl]-ethane; 2-cyano-3-fluorophenyl-trans-4-pentylcyclohexylcarboxylate; trans-4-heptyl-(2-fluoro-3-nitrophenyl)-cyclohexane; 2-fluoro-3-cyano-4-[trans-4-(trans-4-propylcyclohexyl)-cyclohexyl]-benzene; trans-4-propyl-(2-fluoro-3-nitrobiphenyl-4'-yl)-cyclohexane, 2-(trans-4-propylcyclohexyl)-1-[trans-4-(2-fluoro-3-nitrophenyl)-cyclohexyl]-ethane; 2-fluoro-3-cyanophenyl-trans-4-pentylcyclohexylcarboxylate; 2,3-dicyanophenyl-5-pentyl-1,3-pyrimidine, 2-cyano-3-fluorophenyl-5-propyl-1,3-pyrimidine; 2,3-dicyanophenyl-4-pentyl-1,3-dioxane; 2-cyano-3-fluorophenyl-4-pentyl-bicyclo[2.2.2]octane.

6. Active matrix type liquid crystal display device according to any of claims 1 to 5, wherein, when the dielectric anisotropy of the liquid crystal is positive, the rubbing angle is set to be more than or equal to 1 degree and less than or equal to 20 degrees relative to the vertical direction of the electric field, and when the dielectric anisotropy of the liquid crystal is negative, the rubbing angle is set to be more than or equal to 1 degree and less than or equal to 10 degrees relative to the direction of the electric field.

7. Active matrix type liquid crystal display device according to any of claims 1 to 6, wherein the common electrode (1) is composed of a part of the display pixels, and the device is designed for an alternating current to be applied to the common electrode (1).

8. Active matrix type liquid crystal display device according to any of claims 1 to 7, wherein the transmission axis of the polarizer (8) is set to deviate 1 degree or more than 1 degree from the initial orientation direction of the liquid crystal to the rotation direction of the axis (10) of the liquid crystal molecules due to an applied electric field (9).

## Patentansprüche

1. Flüssigkristall-Anzeigevorrichtung (21) vom Aktivmatrix-Typ, die aufweist:
zwei Substrate (7), von denen mindestens eines transparent ist, eine Flüssigkristallschicht (6'), die zwischen den Substraten (7) eingeschaltet ist, eine Orientierungsschicht (5), die zwischen der Flüssigkristallschicht (6') und mindestens einem der Substrate (7) auf dessen Innenseite vorgesehen ist, eine Abtastsignalelektrode (3), eine Bildsignalelektrode, eine Pixelelektrode (4) und eine aktive Vorrichtung (14), die jeweils zwischen der Flüssigkristallschicht (6') und der Orientierungsschicht (5) bzw. dem Substrat (7) vorgesehen sind,
und Polarisationsmittel (8), die auf der Außenseite der Substrate (7) vorgesehen sind und zur Änderung einer optischen Eigenschaft je nach dem Orientierungszustand des Flüssigkristalls dienen, wobei jede der Elektroden so ausgebildet ist, daß ein im wesentlichen zu den Substraten (7) paralleles elektrisches Feld an die Flüssigkristallschicht (6') angelegt werden kann, und mit einer externen Steuereinrichtung (17, 18, 19, 20) verbunden ist, um wahlweise je nach dem Anzeigebildmuster das angelegte elektrische Feld zu steuern, und wobei die Elektroden zwischen mindestens zwei dielektrischen Schichten liegen, die oberhalb und unterhalb der Elektroden angeordnet sind,
**dadurch gekennzeichnet, daß** gilt:
- für den spezifischen Widerstand ρ des Flüssigkristalls:${\text{ρ ≤ 1·10}}^{\text{14}} \text{Ω·cm}$ und vorzugsweise${\text{1·10}}^{\text{9}} {\text{≤ρ≤ 1·10}}^{\text{13}} \text{Ω·cm,}$
- für das Verhältnis l/d des Abstands l zwischen den Elektroden und dem Zellenspalt d:$\text{l/d ≥ 2,0}$ und
- für das Verhältnis der Elastizitätskonstante K₂ zur dielektrischen Anisotropie Δε:${\text{K}}_{\text{2}} {\text{/Δε < 9,0·10}}^{\text{-13}} {\text{N (< 9,0·10}}^{\text{-8}} \text{dyn).}$

2. Flüssigkristall-Anzeigevorrichtung vom Aktivmatrix-Typ nach Anspruch 1, wobei der Zellenspalt d kleiner als oder gleich 6 mm, der Abstand l zwischen den Elektroden größer als oder gleich 10 mm und die Ansteuerungsspannung kleiner als oder gleich 5 Volt sind.

3. Flüssigkristall-Anzeigevorrichtung vom Aktivmatrix-Typ nach Anspruch 1 oder 2, die aufweist:
- eine oder mehrere Flüssigkristall-Verbindungen der allgemeinen Formel I, 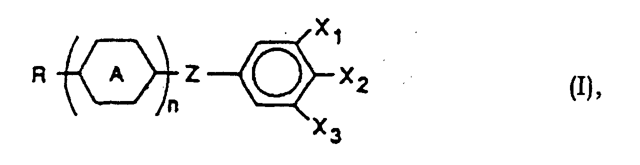 in der bedeuten:
X₁, X₂ und X₃ Fluor, Cyano, Trifluormethyl, Trifluormethoxy, Nitro oder ein Wasserstoffatom,
R C₁₋₁₀-Alkyl oder C₁₋₁₀-Alkoxy, die substituiert sein können,
A einen Cyclohexanring, einen Benzolring, einen Dioxanring, einen Pyrimidinring oder einen Bicyclo[2.2.2]-octan-Ring,
Z eine Einfachbindung, eine Esterbindung, eine Etherbindung, Methylen oder Ethylen und
n 1 oder 2,
und/oder
- eine oder mehrere Flüssigkristall-Verbindungen der allgemeinen Formel II, 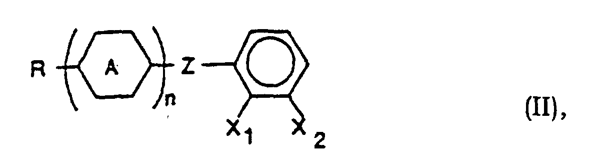 in der bedeuten:
X₁ und X₂ Fluor, Cyano, Trifluormethyl, Trifluormethoxy, Nitro oder ein Wasserstoffatom,
R C₁₋₁₀-Alkyl oder C₁₋₁₀-Alkoxy, die substituiert sein können,
A einen Cyclohexanring, einen Benzolring, einen Dioxanring, einen Pyrimidinring oder einen Bicyclo[2.2.2]-octan-Ring,
Z eine Einfachbindung, eine Esterbindung, eine Etherbindung, Methylen oder Ethylen
und
n 1 oder 2.

4. Flüssigkristall-Anzeigevorrichtung vom Aktivmatrix-Typ nach Anspruch 3, die eine oder mehrere Flüssigkristall-Verbindungen der Formel I aufweist, die ausgewählt sind unter 1, 2-Dicyano-4-[trans-4-(trans-4-propylcyclohexyl)-cyclohexyl]-benzol; trans-4-Propyl-(3,4-dicyanobiphenyl-4'-yl)-cyclohexan; 2-(trans-4-Propylcyclohexyl)-1-[trans-4-(3,4-dicyanophenyl)-cyclohexyl] -ethan; 3,4-Dicyanophenyl-trans-4-pentylcyclohexylcarboxylat; 4-Cyano-3-fluorphenyl-trans-4-propylcyclohexylcarboxylat; trans-4-Heptyl-(3,5-difluor-4-nitrophenyl)-cyclohexan; 2,6-Difluor- 1 -cyano-4-[trans-4-(trans-4-propylcyclohexyl)-cyclohexyl]-benzol; trans-4-Propyl-(3,4,5-trifluorbiphenyl-4'-yl)-cyclohexan; 2-(trans-4-Propylcyclohexyl )-1-[trans-4-(3,5-difluor-4-nitrophenyl)-cyclohexyl]-ethan; 3,5-Difluor-4-nitrophenyltrans-4-pentylcyclohexylcarboxylat; trans-4-Heptyl-(3-fluor-4-cyanophenyl)-cyclohexan; 2-Fluor-1-nitro-4- [trans-4-(trans-4-propylcyclohexyl)-cyclohexyl]-benzol; trans-4-Propyl-(3-fluor-4-cyanobiphenyl-4'-yl)-cyclohexan; 2-(trans-4-Propylcyclohexyl) -1-[trans-4-(3-fluor-4-nitrophenyl)-cyclohexyl]-ethan; 3-Fluor-4-cyanophenyl-trans-4-pentylcyclohexylcarboxylat; trans-4-Heptyl-(4-cyanophenyl)-cyclohexan; 4-Cyanophenyl-5-pentyl- 1,3-pyrimidin; 4-Cyano-3-fluorphenyl-5-propyl-1,3-pyrimidin; 4-Cyanophenyl-4-pentyl-1,3-dioxan; 4-Cyanophenyl-4-pentyl-bicyclo-[2.2.2]octan.

5. Flüssigkristall-Anzeigevorrichtung vom Aktivmatrix-Typ nach Anspruch 3 oder 4, die eine oder mehrere Flüssigkristall-Verbindungen der Formel I aufweist, die ausgewählt sind unter trans-4-Heptyl-(2-cyano-3-fluorphenyl)-cyclohexan; 2-Cyano-3-fluor-4-[trans-4-(trans-4-propylcyclohexyl)-cyclohexyl]-benzol; trans-4-Propyl-(2-cyano-3-fluorbiphenyl-4'-yl)-cyclohexan; 2-(trans-4-Propylcyclohexyl)-1-[trans-4-(2-cyano-3-fluorphenyl)-cyclohexyl]-ethan; 2-Cyano-3-fluorphenyl-trans-4-pentylcyclohexylcarboxylat; trans-4-Heptyl-(2-fluor-3-nitrophenyl)-cyclohexan; 2-Fluor-3-cyano-4-[trans-4-(trans-4-propylcyclohexyl)- , cyclohexyl]-benzol; trans-4-Propyl-(2-fluor-3-nitrobiphenyl-4'-yl)-cyclohexan; 2-(trans-4-Propylcyclohexyl)-1-[trans-4-(2-fluor-3-nitrophenyl)-cyclohexyl]-ethan; 2-Fluor-3-cyanophenyl-trans-4-pentylcyclohexylcarboxylat; 2,3-Dicyanophenyl-5-pentyl-1,3-pyrimidin, 2-Cyano-3-fluorphenyl-5-propyl-1,3-pyrimidin; 2,3-Dicyanophenyl-4-pentyl-1,3-dioxan; 2-Cyano-3-fluorphenyl-4-pentyl-bicyclo[2.2.2]octan.

6. Flüssigkristall-Anzeigevorrichtung vom Aktivmatrix-Typ nach einem oder mehreren der Ansprüche 1 bis 5, wobei der Reibwinkel dann, wenn die dielektrische Anisotropie des Flüssigkristalls positiv ist, so eingestellt ist, daß er in Bezug auf die Vertikalrichtung des elektrischen Feldes gleich oder größer als 1 Grad und kleiner als oder gleich 20 Grad ist, und dann, wenn die dielektrische Anisotropie des Flüssigkristalls negativ ist, so eingestellt ist, daß er in Bezug auf die Vertikalrichtung des elektrischen Feldes gleich oder größer als 1 Grad und kleiner als oder gleich 10 Grad ist.

7. Flüssigkristall-Anzeigevorrichtung vom Aktivmatrix-Typ nach einem oder mehreren der Ansprüche 1 bis 6, wobei die gemeinsame Elektrode (1) aus einem Teil der Anzeigepixel aufgebaut ist und die Vorrichtung zum Anlegen eines Wechselstroms an die gemeinsame Elektrode (1) ausgelegt ist.

8. Flüssigkristall-Anzeigevorrichtung vom Aktivmatrix-Typ nach einem oder mehreren der Ansprüche 1 bis 7, wobei die Durchlässigkeitsachse des Polarisators (8) so eingestellt ist, daß sie 1 Grad oder mehr als 1 Grad von der anfänglichen Orientierungsrichtung des Flüssigkristalls zur Drehrichtung der Achse (10) der Flüssigkristallmoleküle aufgrund eines angelegten elektrischen Feldes (9) abweicht.

## Revendications

1. Dispositif d'affichage à cristaux liquides de type à matrice active (21), comprenant une paire de substrats (7), dont au moins un est transparent, une couche de cristaux liquides (6') insérée entre les substrats (7), un film d'orientation (5) fourni entre la couche de cristaux liquides (6') et au moins un des substrats (7) sur la face interne de celui-ci, une électrode de signal de balayage (3), une électrode de signal d'image, une électrode de pixels (4) et un dispositif actif (14), chacun étant placé entre la couche de cristaux liquides (6') et le film d'orientation (5) ou le substrat (7), respectivement,
et des éléments de polarisation (8) placés sur la face externe des substrats (7) pour changer une caractéristique optique selon l'état d'orientation du cristal liquide, chacune des électrodes étant construite de manière à appliquer un champ électrique, principalement parallèle aux substrats (7), contre la couche de cristaux liquides (6'), et étant reliée à des éléments de contrôle externes (17, 18, 19, 20) pour éventuellement contrôler le champ électrique appliqué selon le motif d'affichage, et
les électrodes se trouvant entre au moins deux couches diélectriques disposées au-dessus et au-dessous des électrodes,
**caractérisé en ce que**
N la résistivité ρ des cristaux liquides est :${\text{ρ≤1·10}}^{\text{14}} \text{Ω·cm,}$ et de préférence${\text{1·10}}^{\text{9}} {\text{≤ ρ ≤ 1·10}}^{\text{13}} \text{Ω·cm,}$ N le rapport l/d de l'écartement l entre les électrodes à l'écartement de cellules d est :$\text{l/d ≥ 2,0,}$ et
N le rapport de la constante d'élasticité K₂ à l'anisotropie diélectrique Δε est :${\text{K}}_{\text{2}} {\text{/Δε < 9,0·10}}^{\text{-13}} {\text{Newton (< 9,0·10}}^{\text{-8}} \text{dyn).}$

2. Dispositif d'affichage à cristaux liquides de type à matrice active selon la revendication 1, dans lequel l'écartement de la cellule d est inférieur ou égal à 6 mm, l'écartement l entre les électrodes est supérieur ou égal à 10 mm, et la tension de commande est inférieure ou égale à 5 V.

3. Dispositif d'affichage à cristaux liquides de type à matrice active selon la revendication 1 ou 2, comprenant
N un ou plusieurs composés de cristaux liquides de formule générale I, 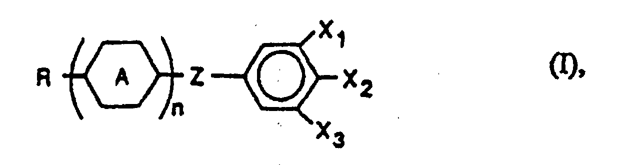 dans laquelle :
X₁, X₂ et X₃ représentent un fluoro, cyano, trifluorométhyle, trifluorométhoxy, nitro ou un atome d'hydrogène,
R représente un alkyle en C₁ à C₁₀ ou alcoxy en C₁ à C₁₀, qui peut être substitué,
A représente un cycle cyclohexane, un cycle benzène, un cycle dioxane, un cycle pyrimidine ou un cycle bicyclo[2.2.2]octane,
Z représente une liaison simple, une liaison ester, une liaison éther, méthylène ou éthylène,
et
n représente 1 ou 2,
et/ou
N un ou plusieurs composés de cristaux liquides de formule générale II, 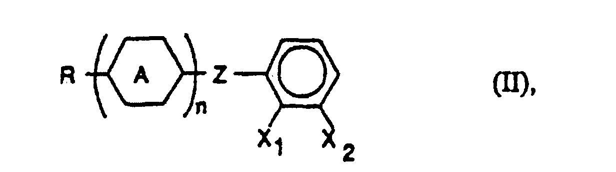 dans laquelle :
X₁ et X₂ représentent un fluoro, cyano, trifluorométhyle, trifluorométhoxy, nitro ou un atome d'hydrogène,
R représente un alkyle en C₁ à C₁₀ ou alcoxy en C₁ à C₁₀, qui peut être substitué,
A représente un cycle cyclohexane, un cycle benzène, un cycle dioxane, un cycle pyrimidine ou un cycle bicyclo[2.2.2]octane,
Z représente une liaison simple, une liaison ester, une liaison éther, méthylène ou éthylène,
et
n représente 1 ou 2.

4. Dispositif d'affichage à cristaux liquides de type à matrice active selon la revendication 3, comprenant un ou plusieurs composés de cristaux liquides de formule I, choisis parmi le 1,2-dicyano-4-[trans-4-(trans-4-propylcyclohexyl)-cyclohexyl]-benzène ; trans-4-propyl-(3,4-dicyanobiphényl-4'-yl)-cyclohexane ; 2-(trans-4-propylcyclohexyl)-1-[trans-4-(3,4-dicyanophényl)-cyclohexyl]-éthane; 3,4-dicyanophényl-trans-4-pentylcyclohexylcarboxylate ; 4-cyano-3-fluorophényl-trans-4-propylcyclohexylcarboxylate; trans-4-heptyl-(3,5-difluoro-4-nitrophényl)-cyclohexane ; 2,6-difluoro-1-cyano-4-[trans-4-(trans-4-propylcyclohexyl)-cyclohexyl]-benzène; trans-4-propyl-(3,4,5-trifluorobiphényl-4'-yl)-cyclohexane; 2-(trans-4-propylcyclohexyl)-1-[trans-4-(3,5-difluoro-4-nitrophényl)-cyclohexyl]-éthane, 3,5-difluoro-4-nitrophényl-trans-4-pentylcyclohexylcarboxylate; trans-4-heptyl-(3-fluoro-4-cyanophényl)-cyclohexane ; 2-fluoro-1-nitro-4-[trans-4-(trans-4-propylcyclohexyl)-cyclohexyl]-benzène ; trans-4-propyl-(3-fluoro-4-cyanobiphényl-4'-yl)-cyclohexane ; 2-(trans-4-propylcyclohexyl)-1-[trans-4-(3-fluoro-4-nitrophényl)-cyclohexyl]-éthane ; 3-fluoro-4-cyanophényl-trans-4-pentylcyclohexylcarboxylate ; trans-4-heptyl-(4-cyanophényl)-cyclohexane ; 4-cyanophényl-5-pentyl-1,3-pyrimidine ; 4-cyano-3-fluorophényl-5-propyl-1,3-pyrimidine ; 4-cyanophényl-4-pentyl-1,3-dioxane ; 4-cyanophényl-4-pentylbicyclo[2.2.2]octane.

5. Dispositif d'affichage à cristaux liquides de type à matrice active selon la revendication 3 ou 4, comprenant un ou plusieurs composés de cristaux liquides de formule II, choisis parmi
le trans-4-heptyl-(2-cyano-3-fluorophényl)-cyclohexane ;
2-cyano-3-fluoro-4-[trans-4-(trans-4-propylcyclohexyl)-cyclohexyl]-benzène ; trans-4-propyl-(2-cyano-3-fluorobiphényl-4'-yl)-cyclohexane ; 2-(trans-4-propyl-cyclohexyl)-1-[trans-4-(2-cyano-3-fluorophényl)-cyclohexyl]-éthane ; 2-cyano-3-fluorophényl-trans-4-pentylcyclohexylcarboxylate ; trans-4-heptyl-(2-fluoro-3-nitrophényl)-cyclohexane ; 2-fluoro-3-cyano-4-[trans-4-(trans-4-propylcyclohexyl)-cyclohexyl]-benzène ; trans-4-propyl-(2-fluoro-3-nitrobiphényl-4'-yl)-cyclohexane, 2-(trans-4-propylcyclohexyl)-1-[trans-4-(2-fluoro-3-nitrophényl)-cyclohexyl]-éthane ; 2-fluoro-3-cyanophényl-trans-4-pentylcyclohexylcarboxylate ; 2,3-dicyanophényl-5-pentyl-1,3-pyrimidine ; 2-cyano-3-fluorophényl-5-propyl-1,3-pyrimidine ; 2,3-dicyanophényl-4-pentyl-1,3-dioxane ; 2-cyano-3-fluorophényl-4-pentyl-bicyclo[2.2.2]octane.

6. Dispositif d'affichage à cristaux liquides de type à matrice active selon l'une quelconque des revendications 1 à 5, dans lequel, lorsque l'anisotropie diélectrique du cristal liquide est positive, l'angle de frottement est réglé pour être supérieur ou égal à 1 degré et inférieur ou égal à 20 degrés par rapport à la direction verticale du champ électrique, et lorsque l'anisotropie diélectrique du cristal liquide est négative, l'angle de frottement est réglé pour être supérieur ou égal à 1 degré et inférieur ou égal à 10 degrés par rapport à la direction du champ électrique.

7. Dispositif d'affichage à cristaux liquides de type à matrice active selon l'une quelconque des revendications 1 à 6, dans lequel l'électrode commune (1) est composée d'une partie des pixels d'affichage, et le dispositif est conçu pour l'application d'un courant alternatif à l'électrode commune (1).

8. Dispositif d'affichage à cristaux liquides de type à matrice active selon l'une quelconque des revendications 1 à 7, dans lequel l'axe de transmission du polariseur (8) est ajusté pour dévier de 1 degré ou plus de 1 degré par rapport à la direction d'orientation initiale du cristal liquide dans la direction de rotation de l'axe (10) des molécules de cristal liquide dû à un champ électrique appliqué (9).
